# EUROPEAN PATENT SPECIFICATION

(11) **EP 2 094 754 B1**
(45) Date of publication and mention of the grant of the patent: **10.03.2010**
(21) Application number: 07765084.4
(22) Date of filing: 05.07.2007
(51) Int. Cl.: C08F 299/04

(54) **UNSATURATED POLYESTER RESIN OR VINYL ESTER RESIN COMPOSITIONS**
UNGESÄTTIGTES POLYESTERHARZ ODER VINYLESTERHARZ ENTHALTENDE ZUSAMMENSETZUNGEN
COMPOSITIONS DE RÉSINE DE POLYESTER INSATURÉ OU DE RÉSINE D'ESTER VINYLIQUE

(30) Priority: 06.07.2006 EP 06014026
(43) Date of publication of application: 02.09.2009
(73) Proprietor: DSM IP Assets B.V., 6411 TE Heerlen (NL)
(72) Inventor: JANSEN, Johan Franz Gradus Antonius, 6165 AP Geleen (NL); KRAEGER, Ronald, Ivo, NL-3812 HE AMERSFOORT (NL)
(74) Representative: Verhaegen, Ilse Maria M.
(86) International application number: PCT/EP2007/005963
(87) International publication number: WO 2008/003498

(56) References cited:
- US-A- 4 380 605

## Description

The present invention relates to two-component composition comprising a first component and a second component; the first component comprising an unsaturated polyester resin or vinyl ester resin and the second component comprising a peroxide compound having formula ROOH, in which R is hydrogen or an optionally substituted alkyl group. In particular, the present invention relates to two-component unsaturated polyester resin or vinyl ester resin compositions for structural parts.

The present invention further also relates to objects and structural parts prepared from such two-component compositions. The present invention finally also relates to a process for curing such two-component compositions.

As meant herein, objects and structural parts are considered to have a thickness of at least 0,5 mm and appropriate mechanical properties. The term "objects and structural parts" as meant herein also includes cured resin compositions as are used in the field of chemical anchoring, construction, roofing, flooring, windmill blades, containers, tanks, pipes, automotive parts, boats, etc.

As used herein, the term "two-component system" refers to systems where two separate components (A and B) are being spatially separated from each other, for instance in separate cartridges or the like, and is intended to include any system wherein each of such two separate components (A and B) may contain further separate components. The components are combined at the time the system is used.

In the curing of unsaturated polyester resins and vinyl ester resins, classes of resins that can generally be cured under the influence of peroxides, gel time is a very important characteristic of the curing properties. In addition also the time from reaching the gel time to reaching peak temperature, and the level of the peak temperature (higher peak temperature generally results in better curing) are important. Apart from that, of course, also the mechanical properties of the objects and/or structural parts obtained in the curing process are important. As meant herein gel time represents the time lapsed in the curing phase of the resin to increase in temperature from 25 °C to 35 °C. Normally this corresponds to the time the fluidity (or viscosity) of the resin is still in a range where the resin can be handled easily. In closed mould operations, for instance, this time period is very important to be known. Accordingly, the term good curing properties reflects, amongst other things, that the resin composition has suitable gel-time properties: i.e. the resin to be cured should remain sufficiently fluid for an acceptable time in the first stage of curing. For good curing properties it is important, that the gel time is rather short, i.e. in the order of some minutes to few tens of minutes. For reasons of process efficiency and results to be achieved, the skilled man accordingly will always try to find options to achieve a minimal gel time, while retaining good mechanical properties of the ultimately cured products. In addition, the skilled man also will try to find curable resin compositions having good storage stability, i.e. being stable (i.e. remain their handling properties without gellification) before being subjected to curing for at least one week after manufacture of the resin composition.

W. D. Cook et al., in Polym. Int. Vol.50, 2001, at pages 129-134 describe in an interesting article various aspects of control of gel time and exotherm behaviour during cure of unsaturated polyester resins. They also demonstrate how the exotherm behaviour during cure of such resins can be followed. Figures 2 and 3 of this article show the gel times in the bottom parts of the exotherms measured. Because these authors focus on the exotherms as a whole, they also introduced some correction of the exotherms for heat loss. As can be seen from the figures, however, such correction for heat loss is not relevant for gel times below 100 minutes.

All polyester resins, by their nature, undergo some changes over time from their production till their actual curing. One of the characteristics where such changes become visible is the stability in the curable state of the resin after its manufacture.

The state of the art unsaturated polyester or vinyl ester resin systems generally are being cured under the influence of peroxides and are pre-accelerated by the presence of metal compounds, especially cobalt salts, tertiary amines and mercaptans. As can be seen from the article of W. D. Cook *et al.,* as has been cited above, cobalt accelerators are the most common accelerators being used. Cobalt naphthenate and cobalt octanoate are the most widely use accelerators in the resins of the state of the art. In the standard unsaturated polyester and vinyl ester resins of the prior art they are usually present in an amount of from 0.1 to 10 mmol/kg. An excellent review article of M. Malik et al. In J.M.S. - Rev. Macromol. Chem. Phys., C40(2&3), p.139-165 (2000) gives a good overview of the current status of these resin systems. Curing is addressed in chapter 9. The presence of cobalt in resin systems, however, generally is undesirable for environmental reasons because of the suspect carcinogenity (toxicity) of cobalt. This is the more so, inasmuch the cobalt content of the resin systems is higher.

In addition to accelerators, the polyester resins usually also contain radical inhibitors for ensuring that the resin systems do not gellify prematurely (i.e. that they have a good storage stability). Furthermore, radical inhibitors are being used to ensure that the resin systems have an appropriate gel time and/or for adjusting the gel-time value of the resin system to an even more suitable value.

Most commonly, in the state of the art, polymerization initiation of unsaturated polyester resins, etc. by redox reactions involving peroxides, is accelerated or pre-accelerated by a cobalt compound in combination with another accelerator.

An excellent review article of M. Malik et al. in J.M.S. - Rev. Macromol. Chem. Phys., C40(2&3), p.139-165 (2000) gives a good overview of the current status of resin systems.

All unsaturated polyesters and vinyl esters undergo upon storage small changes. One of the features which reflects these changes is the so called gel time drift or change in gel time upon storage.

Accordingly, for the unsaturated polyester resins as are part of the current state of the art there is still need for finding new accelerator combinations for resin systems which can be cured with hydroperoxides. Preferably the mechanical properties of the resin composition after curing with a peroxide are unaffected (or improved) as a result of the changes in the resin composition. Moreover, for environmental reasons, the presence of cobalt in the resins is less preferred.

The present inventors now, surprisingly, found that efficient curing could be obtained by the use of a two-component composition comprising a first component and a second component, wherein the first component being a resin composition comprising an unsaturated polyester resin or vinyl ester resin, an iron compound and a thiol-containing compound, and the second component comprises an a peroxide compound having formula ROOH, in which R is hydrogen or an optionally substituted alkyl group.

According to the present invention compositions having good cure characteristics are obtained, i.e. the compositions according to the invention have short gel time, short peak time and/or high peak temperature. In the curing of unsaturated polyester resins, gel time is a very important characteristic of the curing properties. In addition also the time from reaching the gel time to reaching peak temperature, and the level of the peak temperature (higher peak temperature generally results in better curing) are important.

According to the present invention essentially cobalt free cured objects with excellent mechanical properties and low amounts of rest styrene can be obtained.

Attempts to find resin compositions pre-accelerated by other metals than cobalt have been made in the past. Reference can, for instance, be made to US-A-4380605 describes that the crosslinking of unsaturated polyester resins at room temperature in the presence of a peroxyester initiator can be accelerated by a mercapto compound and a metal salt wherein the metal salt is selected from the group consisting of copper, iron or a mixture of metal salts. This document does not teach that a resin composition comprising unsaturated polyester, an iron compound and a thiol-containing compound would be curable with a hydroperoxide.

US-A-4429092 teaches that curing of a vinyl ester resin composition containing copper, tin and laurylmercaptan with a hydroperoxide results in a gel time which is much higher compared with the use of a peroxyester. This document also teaches that no efficient curing can be obtained by curing vinyl ester resin composition containing iron and laurylmercaptan with t-butyl peroxybenzoate.

US-A-5235010 discloses an accelerator composition for the curing of unsaturated polyester resins comprising a complex of at least two salts of at least two different metals selected from the group consisting of lithium, magnesium, manganese, copper, cobalt, vanadium and iron, and an organic oxygen-containing compound capable of forming a metal complex with said metal salt including at least one functional group selected from the group consisting of an aldehyde, ketone, ether, ester or alcohol group. The curing is effected using conventional peroxide initiators known for use with unsaturated polyesters, such as for example methyl ethyl ketone peroxide or acetylacetone peroxide. Further, other materials including thiols and nitrogen-containing compounds may be present during the curing process. Suitable nitrogen-containing compounds are ammonia, ammonium salts, heterocyclic nitrogeneous bases, cycloaliphatic primary amines and adducts of these materials with anhydrides or epoxides. There is no indication in this reference that acceleration can also be achieved with the combination of an iron compound and a thiol-containing compound.

US-A-5310836 describes accelerator composition for the curing of unsaturated maleic, allylic, vinylic, polyester resin, epoxy resins and polyurethanes comprising a complex of a metal selected from the group consisting of lithium, aluminium, magnesium, manganese, zinc and tin and a thio-containing compound. There is no suggestion at all that acceleration can be achieved with the combination of an iron compound and a thiol-containing compound.

The styrene content in the objects obtained after curing the resin composition is an important factor in the determination how efficient a cure system is. Preferable the residual amount of styrene after cure is as low as possible as this implies that the curing is very efficient. Furthermore, low residual amount of styrene results in lower styrene emission that is advantageous from an environmental point of view. Post-curing is often applied for small objects in order to reduce styrene content in small objects. Post-curing is generally effected by storing the object at elevated temperature, for example at 80°C, for at least 24 hours.

The unsaturated polyester resin or vinyl ester resin as is comprised in the resin compositions of the A component according to the present invention, may suitably be selected from the unsaturated polyester resins or vinyl ester resin as are known to the skilled man. Examples of suitable unsaturated polyester or vinyl ester resins to be used as basic resin systems in the resins of the present invention are, subdivided in the categories as classified by Malik et al., cited above.
(1) Ortho-resins: these are based on phthalic anhydride, maleic anhydride, or fumaric acid and glycols, such as 1,2-propylene glycol, ethylene glycol, diethylene glycol, triethylene glycol, 1,3-propylene glycol, dipropylene glycol, tripropylene glycol, neopentyl glycol or hydrogenated bisphenol-A. Commonly the ones derived from 1,2-propylene glycol are used in combination with a reactive diluent such as styrene.
(2) Iso-resins: these are prepared from isophthalic acid, maleic anhydride or fumaric acid, and glycols. These resins may contain higher proportions of reactive diluent than the ortho resins.
(3) Bisphenol-A-fumarates: these are based on ethoxylated bisphenol-A and fumaric acid.
(4) Chlorendics: are resins prepared from chlorine/bromine containing anhydrides or phenols in the preparation of the UP resins.
(5) Vinyl ester resins: these are resins, which are mostly used because of their because of their hydrolytic resistance and excellent mechanical properties, as well as for their low styrene emission, are having unsaturated sites only in the terminal position, introduced by reaction of epoxy resins (e.g. diglycidyl ether of bisphenol-A, epoxies of the phenol-novolac type, or epoxies based on tetrabromobisphenol-A) with (meth)acrylic acid. Instead of (meth)acrylic acid also (meth)acrylamide may be used. Besides these classes of resins also so-called dicyclopentadiene (DCPD) resins can be distinguished as unsaturated polyester resins.

As used herein, a vinyl ester resin is a (meth)acrylate functional resin. Besides the vinyl ester resins as described in Malik et al., also the class of vinyl ester urethane resins (or urethane methacylate resin) can be distinguished as vinyl ester resins. Preferably, the vinyl ester used in the present invention is a resin obtained by the esterification of an epoxy resin with (meth)acrylic acid or (meth)acrylamide.

All of these resins, as can suitably used in the context of the present invention, may be modified according to methods known to the skilled man, e.g. for achieving lower acid number, hydroxyl number or anhydride number, or for becoming more flexible due to insertion of flexible units in the backbone, etc. The class of DCPD-resins is obtained either by modification of any of the above resin types by Diels-Alder reaction with cyclopentadiene, or they are obtained alternatively by first reacting maleic acid with dicyclopentadiene, followed by the resin manufacture as shown above.

Of course, also other reactive groups curable by reaction with peroxides may be present in the resins, for instance reactive groups derived from itaconic acid, citraconic acid and allylic groups, etc. Accordingly, the unsaturated polyester resins or vinyl ester resins used in the present invention may contain solvents. The solvents may be inert to the resin system or may be reactive therewith during the curing step. Reactive solvents are particularly preferred. Examples of suitable reactive solvents are styrene, α-methylstyrene, (meth)acrylates, N-vinylpyrrolidone and N-vinylcaprolactam.

The unsaturated polyester resins and vinyl ester resins as are being used in the context of the present invention may be any type of such resins, but preferably are chosen from the group of DCPD-resins, iso-phthalic resins and ortho-phthalic resins and vinyl ester resins. More detailed examples of resins belonging to such groups of resins have been shown in the foregoing part of the specification. More preferably, the resin is an unsaturated polyester resin preferably chosen from the group of DCPD-resins, iso-phthalic resins and ortho-phthalic resins.

The resin composition preferably has an acid value in the range of from 0,001 - 300 mg KOH/g of resin composition. As used herein, the acid value of the resin composition is determined titrimetrically according to ISO 2114-2000. Preferably, the molecular weight of the unsaturated polyester resin or vinyl ester resin is in the range of from 500 to 200.000 g/mole. As used herein, the molecular weight of the resin is determined using gel permeation chromatography according to ISO 13885-1.

The resin composition generally contains less than 5 wt.% water.

In the context of the invention all kinds of iron compounds can be used. According to the invention, the iron compound present in the resin composition is preferably an iron salt or complex. More preferably, the iron compound is an iron²⁺ salt or complex or iron³⁺ salt or complex. Even more preferably, the iron compound is an iron²⁺ salt or iron³⁺ salt. The iron²⁺ salt is preferably organic iron²⁺ salt. The iron³⁺ salt is preferably an organic iron³⁺ salt. The organic iron²⁺ salt or the organic iron³⁺ salt is preferably an iron carboxylate or an iron acetoacetate. It will be clear that, instead of a single iron compound also a mixture of iron compounds can be used.

The iron compound is preferably present in the resin composition in an amount of at least 1 mmol iron per kg of primary resin system, more preferably at least 3 mmol iron per kg of primary resin system. The upper limit of the iron content is not very critical, although for reasons of cost efficiency and/or color of course no extremely high concentrations will be applied. Generally the concentration of the iron compound in the primary resin system will be lower than 50 mmol iron per kg of primary resin system, preferably lower than 30 mmol iron per kg of primary resin system.

For understanding of the invention, and for proper assessment of the amounts of iron compound to be present in the resin composition of the A component, the term "primary resin system" as used herein is understood to mean the total weight of the resin, but excluding any fillers as may be used when applying the resin system for its intended uses. The primary resin system therefore consists of the unsaturated polyester resin or vinyl ester resin, any additives present therein (except for the peroxide component that is to be added shortly before the curing) soluble in the resin, such as accelerators, promotors, inhibitors, low-profile agents, colorants (dyes), thixotropic agents, release agents etc., as well as styrene and/or other solvents as may usually be present therein. The amount of additives soluble in the resin usually may be as from 1 to 25 wt.% of the primary resin system; the amount of styrene and/or other solvent may be as large as up to 50 wt.% of the primary resin system. The primary resin system, however, explicitly does not include compounds not being soluble therein, such as fillers (e.g. glass or carbon fibers), talc, clay, solid pigments (such as, for instance, titanium dioxide (titanium white)), flame retardants, e.g. aluminium oxide hydrates, etc.

The thiol in the thiol-containing compound of the resin composition of the A component is preferably an aliphatic thiol. The aliphatic thiol is preferably an α-mercapto acetate or β-mercapto propionate, or a derivative or mixture thereof. The thiol-functionality of the thiol-containing compound in the resin composition is preferably ≥ 2, more preferably ≥ 3.

Preferably, the amount of the thiol-containing compound is from 0,01 to 10 % by weight, calculated on the total weight of the primary resin system. More preferably, the amount of the thiol-containing compound is from 0,1 to 2 % by weight; even more preferably between 0,25% and 1,5% by weight.

In a preferred embodiment of the invention, the resin composition of the A component also comprises a base because this results in a more efficient curing, i.e. shorter gel time and/or higher peak temperature.

Preferably, the base is an organic base with pKₐ ≥ 10 or the base is an alkali metal or earth alkali metal compound. More preferably, the base is an alkali metal or earth alkali metal compound. The organic base with pKₐ ≥ 10 is preferably a nitrogen containing compound, preferably an amine, more preferably a tertiary amine. The alkali metal or earth alkali metal compound is preferably an oxide, hydroxide, carboxylate, carbonate or hydrocarbonate. Preferably, the alkali metal is not lithium and the earth alkali metal is not magnesium in view of the low solubility of lithium and magnesium compounds in the resin composition. Most preferably, the base is a potassium compound. The potassium compound is preferably a potassium carboxylate, preferably a potassium C₆-C₂₀ carboxylate. In a preferred embodiment of the present invention, the potassium carboxylate is in-situ formed by adding potassium hydroxide to the resin composition.

Preferably, the amount of the base is from 0,001 to 2.000 mmol/kg of primary resin system. More preferably, the amount of the base is from 0.1 to 200 mmol/kg of primary resin system.

In the resin composition of the A component , the molar ratio between iron and the basic functionality of the base is preferably from 10:1 to 1:200, more preferably from 3:1 to 1: 25. The molar ratio between the thiol groups of the thiol containing compound and the basic functionality of the base is preferably from 300:1 to 1: 40, more preferably from 20:1 to 1:4. The molar ratio between iron and the thiol groups of the thiol containing compound is preferably from 10: 1 to 1:400, more preferably from 1:1 to 1: 55.

The second component (B component) of the two-component system comprises a peroxide compound having formula ROOH, in which R is hydrogen or an optionally substituted alkyl group. The peroxide may be solid or liquid. Examples of suitable peroxides are: tertiary alkyl hydroperoxides (such as, for instance, t-butyl hydroperoxide), other hydroperoxides (such as, for instance, cumene hydroperoxide), the special class of hydroperoxides formed by the group of ketone peroxides (perketones, being an addition product of hydrogen peroxide and a ketone, such as, for instance, methyl ethyl ketone peroxide and acetylacetone peroxide). Often the organic peroxides used as curing agent are tertiary hydroperoxides, i.e. peroxy compounds having tertiary carbon atoms directly united to an -OOH group. Clearly also mixtures of these peroxides with other peroxides may be used in the context of the present invention. The peroxides may also be mixed peroxides, i.e. peroxides containing any two of different peroxygen-bearing moieties in one molecule).

Most preferably, however, the peroxide is a liquid hydroperoxide. The liquid hydroperoxide, of course, also may be a mixture of hydroperoxides. Handling of liquid hydroperoxides when curing the resins for their final use is generally easier: they have better mixing properties and dissolve more quickly in the resin to be cured.

In particular it is preferred that the peroxide is selected from the group of ketone peroxides, a special class of hydroperoxides. The peroxide being most preferred in terms of handling properties and economics is methyl ethyl ketone peroxide (MEK peroxide).

In a preferred embodiment of the invention, the two-component composition according to the invention also contains one or more reactive diluents, preferably in an amount of at least 5 weight %.

Such reactive diluents are especially relevant for reducing the viscosity of the resin in order to improve the resin handling properties, particularly for being used in techniques like vacuum injection, etc. However, the amount of such reactive diluent in the resin composition according to the invention is not critical. Preferably, the reactive diluent is a methacrylate and/or styrene.

In a further preferred embodiment of the present invention, the resin composition also contains one or more radical inhibitors.

More preferably, the resin compositions according to the invention contain one or more radical inhibitors selected from the groups of phenolic compounds, stable radicals like galvinoxyl and its derivatives or N-oxyl based compounds, catechols or phenothiazines.

The amount of radical inhibitor as used in the context of the present invention, may, however, vary within rather wide ranges, and may be chosen as a first indication of the gel time as is desired to be achieved. Preferably, the amount of phenolic inhibitor is from about 0,001 to 35 mmol per kg of primary resin system, and more preferably it amounts to more than 0,01, most preferably more than 0,1 mmol per kg of primary resin system. The skilled man quite easily can assess, in dependence of the type of inhibitor selected, which amount thereof leads to good results according to the invention.

Suitable examples of radical inhibitors that can be used in the resin compositions according to the invention are, for instance, 2-methoxyphenol, 4-methoxyphenol, 2,6-di-t-butyl-4-methylphenol, 2,6-di-t-butylphenol, 2,4,6-trimethylphenol, 2,4,6-tris-dimethylaminomethyl phenol, 4,4'-thio-bis(3-methyl-6-t-butylphenol), 4,4'-isopropylidene diphenol, 2,4-di-t-butylphenol, 6,6'-di-t-butyl-2,2'-methylene di-p-cresol, hydroquinone, 2-methylhydroquinone, 2-t-butylhydroquinone, 2,5-di-t-butylhydroquinone, 2,6-di-t-butylhydroquinone, 2,6-dimethylhydroquinone , 2,3,5-trimethylhydroquinone, catechol, 4-t-butylcatechol, 4,6-di-t-butylcatechol, benzoquinone, 2,3,5,6-tetrachloro-1,4-benzoquinone, methylbenzoquinone, 2,6-dimethylbenzoquinone, napthoquinone, 1-oxyl-2,2,6,6-tetramethylpiperidine,2,6-dit-butyl-α-(3,5-di-t-butyl-4-oxo-2,5-cyclohexadien-1-ylidene)-p-tolyloxy (galvinoxyl), 1-oxyl-2,2,6,6-tetramethylpiperidine-4-ol (a compound also referred to as TEMPOL), 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxyl-2,2,5,5-tetramethyl-3-carboxylpyrrolidine (also called 3-carboxy-PROXYL), aluminium-N-nitrosophenyl hydroxylamine, diethylhydroxylamine, phenothiazine and/or derivatives or combinations of any of these compounds.

Advantageously, the amount of radical inhibitor in the resin composition according to the invention is in the range of from 0,0001 to 10 % by weight, calculated on the total weight of the primary resin system of the resin composition. More preferably, the amount of radical inhibitor in the resin composition is in the range of from 0,001 to 1 % by weight.

In specifically preferred embodiments of the invention the two-component composition is essentially free of cobalt. Essentially free of cobalt means that the cobalt concentration is lower than 0,01 mmol Co per kg primary resin system, preferably lower than 0,001 mmol Co per kg primary resin system. Most preferably the two-component composition is free of cobalt.

The two-component composition according to the present invention can be applied in all applications as are usual for such types of resins. In particular they can suitably used in closed mould applications, but they also can be applied in open mould applications. For closed mould applications it is especially important that the manufacturer of the closed mould products reliably can use the favorable (i.e. reduced) gel-time drift tendency of the resin compositions according to the invention. End segments where the unsaturated polyester resin or vinyl ester resin compositions according to the present invention can be applied are also marine applications, chemical anchoring, roofing, construction, relining, pipes & tanks, flooring, windmill blades, putties etc. That is to say, the resin compositions according to the invention can be used in all known uses of unsaturated polyester resins and vinyl ester resins.

The present invention further also relates to all such objects or structural parts as are being obtained when curing the two-component compositions according to the invention. These objects and structural parts have excellent mechanical properties.

The present invention also relates to a process for radically curing the two-component composition according to the invention. It has surprisingly been found that the combination of the iron compound and the thiol-containing compound accelerates the radically curing of the unsaturated polyester or vinyl ester with the peroxide. The curing is preferably effected at a temperature in the range of from -20 to +200 °C, preferably in the range of from -20 to +100 °C, and most preferably in the range of from -10 to +60 °C (so-called cold curing). In a preferred embodiment the curing is effected essentially free of cobalt.

The invention is now demonstrated by means of a series of examples and comparative examples. All examples are supportive of the scope of claims. The invention, however, is not restricted to the specific embodiments as shown in the

### examples.

### Experimental part

The resins used for curing are commercially available products from DSM Composite Resins B.V., Schaffhausen, Switzerland, and and in addition thereto also a resin -hereinafter referred to as Resin A- was specifically prepared on behalf of the inventors for being used in the tests. The peroxides used for curing are commercially available products from Akzo Nobel Inc.

### Preparation of Resin A

184,8 g of propylene glycol (PG), 135,8 g of diethylene glycol (DEG), 216,1 g of phthalic anhydride (PAN), 172,8 g of maleic anhydride (MAN), and 0.075 g 2-t-butylhydroquinone were charged in a vessel equipped with a reflux condenser, a temperature measurement device and inert gas inlet. The mixture was heated slowly by usual methods to 205 °C. At 205 °C the mixture was kept under reduced pressure until the acid value reached a value below 16 mg KOH/g resin and the falling ball viscosity at 100 °C was below 50 dPa.s. Then the vacuum was relieved with inert gas, and the mixture was cooled down to 130 °C, and thereafter the solid UP resin so obtained was transferred to a mixture of 355 g of styrene and 0,07 g of mono-t-butylhydroquinone and was dissolved at a temperature below 80 °C. The final resin viscosity reached at 23 °C was 640 mPa.s, and the Non Volatile Matter content was 64,5 wt.%.

### Monitoring of curing

In most of the Examples and Comparative Examples presented hereinafter it is mentioned, that curing was monitored by means of standard gel time equipment. This is intended to mean that both the gel time (T_{gel}) or T_{25->35°C}) and peak time (Tₚₑₐₖ or T_{25->peak}) were determined by exotherm measurements according to the method of DIN 16945 when curing the resin with the peroxides as indicated in the Examples and Comparative Examples. The equipment used therefore was a Soform gel timer, with a Peakpro software package and National Instruments hardware; the waterbath and thermostat used were respectively Haake W26, and Haake DL30.

### Examples 1a-1e and Comparative Experiments A-B

Formulations for the A component were prepared based on 90g resin A, 10g styrene, various amounts of pentaerythritol tetrakis(3-mercaptopropionate) (4-SH; commercially available from Bruno Bock Chemische Fabrik GmbH & Co.) and 0,14g iron naphtenate solution in spirits (12% Fe metal). Curing was performed at 25 °C with 3g Butanox M-50 as B component and monitored with the geltimer. The results are shown in table 1.

**Table 1**

| | g 4-SH | gel time (min) | peak time (min) | temp (°C) |
|---|---|---|---|---|
| Comp Exp A | 0 | >1200 | | |
| Example 1a | 0,05 | 8,2 | 15,9 | 40 |
| Example 1b | 0,1 | 6,5 | 14,9 | 50 |
| Example 1c | 0,5 | 7,3 | 14,7 | 152 |
| Example 1d | 1 | 7,6 | 15,3 | 147 |
| Example 1e | 2 | 6,9 | 15,9 | 140 |

As a further comparative experiment (comp b) a formulation was prepared with 4-SH but without iron salt. After the addition of Butanox M50 no curing was observed (gel time >1200 min).
These results indicate that both iron as well as thiol needs to be present for an efficient curing.

### Examples 2a-2f

Formulations for the A component were prepared based on 90g resin A, 10g styrene, various amounts of pentaerythritol tetrakis mercaptopropionate (4-SH), 1 g K octanoate solution on PEG (15%) and 0,14g iron naphtenate solution in spirits (12% Fe metal). Curing was performed with 3g Butanox M-50 as B component and monitored with the geltimer. The results are shown in table 2.

**Table 2**

| Example | g 4-SH | gel time (min) | peak time (min) | temp (°C) |
|---|---|---|---|---|
| 2a | 0,01 | 32 | 51 | 40 |
| 2b | 0,05 | 17 | 40 | 48 |
| 2c | 0,1 | 7 | 15 | 50 |
| 2d | 0,25 | 5 | 23 | 149 |
| 2e | 1 | 3 | 8 | 156 |
| 2f | 2 | 2 | 7 | 147 |

These examples especially in combination with the results of example 1 clearly demonstrate that the addition of a base accelerates the curing according to the invention.

### Example 3

A Formulation for the A component was prepared based on 90g resin A, 10g styrene, 0,5 g 4-SH, 0,25g 1,8-diaza-bicyclo[5.4.0]-undec-7-ene and 0,04g iron naphtenate solution in spirits (12% Fe metal)(1 mmol Fe/ kg primary resin). Curing was performed with 3g Butanox M-50 as B component and monitored with the geltimer resulting in a geltime of 6,6 min.

This example demonstrates that amines can be used as base. Further more this result demonstrates that with 1 mmol iron per kg primary a good curing can be achieved.

### Examples 4a-4i

Formulations were prepared based on 90 g resin A, 10 g styrene, 0,55g 4-SH and 0,16 g iron napthenate. To these formulations various amounts of K octanoate in PEG was added. After stirring for 5 min the formulations the A components were cured with 3% (relative to the primary resin system) Butanox M-50 as the B component and the curing was monitored with the gel time equipment. The results are given in table 3.

**Table 3**

| Example | g Koct | gel time (min) | peak time (min) | temp (°C) |
|---|---|---|---|---|
| 4a | 0 | 4,9 | 11,1 | 164 |
| 4b | 0,05 | 3,6 | 10,6 | 164 |
| 4c | 0,1 | 3,1 | 9,8 | 168 |
| 4d | 0,2 | 2,9 | 9,7 | 165 |
| 4^{e} | 0,5 | 2,8 | 10,9 | 168 |
| 4f | 1 | 2,7 | 10,5 | 172 |
| 4g | 1,5 | 2,4 | 9,2 | 178 |
| 4h | 2 | 2,3 | 8,7 | 177 |
| 4i | 5 | 1,3 | 4,8 | 185 |

These results clearly indicate that the gel time can be tuned via the addition of a base.

### Examples 5a-5d

Formulations were prepared for the A component based on 90 g resin A, 10 g styrene, 1g 4-SH and 0,15 g iron napthenate. After stirring for 5 min the formulations were cured with 3% (relative to the primary resin system) peroxide as the B component and the curing was monitored with the gel time equipment. The results using various peroxide are in table 4

**Table 4**

| Example | peroxide | gel time (min) | peak time (min) | temp (°C) |
|---|---|---|---|---|
| 5a | Butanox M-50 | 9,2 | 22 | 143 |
| 5b | Cyclonox LE50 | 12 | 24 | 82 |
| 5c | Perkadox 50L | 134 | 165 | 67 |
| 5d | H2O2, 30% in water | 13,5 | 29 | 167 |

These results clearly indicate that the curing can be tuned via a selection of peroxide, which can be selected from a wide range of types of peroxides.

### Examples 6 a-e

A components were prepared by mixing x g of various resins, y g styrene, 1g 4-SH and 0,138g Iron naphtenate (12 % iron, in spirits) during 5 min. Next 1,2 g butanox M- 50 was added as the B component end the cure was subsequently monitored with the gel-timer. The results are shown in table 5

**Table 5**

| Ex | Resin (g) | Styrene (g) | gel time (min) | peak time (min) | temp (°C) |
|---|---|---|---|---|---|
| 6a | Palatal P 5-01 (90) | 10 | 8.9 | 22.7 | 134 |
| 6b | Palatal P 6-01 (90) | 10 | 7.3 | 13.1 | 186 |
| 6c | Palatal P 69-02 (90) | 10 | 7.2 | 12.6 | 170 |
| 6d | Daron XP 45-A-2 (100) | 0 | 8.7 | 17.1 | 168 |
| 6e | Synolite 8388-N-1 (100) | 0 | 4.4 | 9.9 | 145 |

These examples clearly demonstrate that multiple resins can be used according to the invention

### Examples 7a-7b

Two castings of 4 mm were prepared based on 500g resin A according to the formulations described below (all amounts are in grams) and cured with Butanox M-50. The 4 mm castings were made between hardened borosilicate glass that was separated with a 4mm EPDM U-shaped rim The casting were released and post cured during 24hrs at 60°C and 24hrs at 80°C. Mechanical properties of the cured objects were determined according to ISO 527-2. The Heat Distortion Temperature (HDT) was measured according to ISO 75-Ae. Residual styrene contents were measured by gaschromatography using GC-FID (Gas Chromatography with a Flame Ionization Detector), using butylbenzene as an internal standard, after extraction of the cured objects in dichloromethane for 48 hrs.

**Table 6**

| | 7a | 7b |
|---|---|---|
| Component A | | |
| resin A | 500 | 500 |
| pentaerythritol tetra mercapto propionate | 1,25 | 0,25 |
| Koctanoate in PEG | | 5 |
| Nuodex Fe (6% Fe) | 1,46 | 1,40 |
| Component B | | |
| Butanox M50 | 10 | 10 |
| | | |
| HDT (°C) | 70 | 67 |
| Tensile strength(Mpa) | 50 | 57 |
| Emod (Gpa) | 3,6 | 3,5 |
| Elongation at Break (%) | 1,5 | 1,8 |
| Rest styrene (%) | <0,1 | <0,1 |
| Barcol hardness | 44 | 45 |

These experiments clearly demonstrate that materials with properties suitable for construction purposes can be obtained with the cure system according to the invention.

## Claims

1. Two-component composition comprising a first component and a second component, wherein the first component being a resin composition comprising an unsaturated polyester resin or vinyl ester resin, an iron compound and a thiol-containing compound, and the second component comprises a peroxide compound having formula ROOH, in which R is hydrogen or an optionally substituted alkyl group.

2. Two-component composition according to claim 1, **characterized in that** the iron compound is an iron carboxylate or an iron acetoacetate.

3. Two-component composition according to anyone of claims 1-2, **characterized in that** the thiol in the thiol-containing compound is an aliphatic thiol.

4. Two-component composition according to claim 3, **characterized in that** the aliphatic thiol is an α-mercapto acetate or β-mercapto propionate, or a derivative or mixture thereof.

5. Two-component composition according to any one of claims 1-4, **characterized in that** the thiol-functionality of the thiol-containing compound is ≥ 2, more preferably ≥ 3.

6. Two-component composition according to anyone of claims 1-5, **characterized in that** the resin composition also comprises a base.

7. Two-component composition according to claim 6, **characterized in that** the base is an organic base with pKₐ ≥ 10 or the base is an alkaline metal or earth alkaline metal compound.

8. Two-component composition according to claim 7, **characterized in that** the organic base with pKₐ ≥ 10 is a nitrogen containing compound, preferably an amine, more preferably a tertiary amine.

9. Two-component composition according to claim 6, **characterized in that** the base is an alkaline metal or earth alkaline metal compound, preferably a potassium carboxylate.

10. Two-component composition according to anyone of claims 6-9, **characterized in that** molar ratio between iron and the basic functionality of the base is from 10:1 to 1:200.

11. Two-component composition according to anyone of claims 1-10, **characterized in that** the peroxide is selected from the group of perethers and perketones, and preferably is methylethylketone peroxide.

12. Two-component composition according to any of claims 1-11, **characterized in that** the resin composition is essentially free of cobalt.

13. Process for radically curing a resin composition, **characterized in that** the curing is performed starting from a two-component composition according to any one of claims 1-12.

14. Cured objects or structural parts obtained from a two-component composition according to any of claims 1-12.

15. Cured objects or structural parts obtained from a two-component composition obtained by a process according to claim 13.

## Patentansprüche

1. Zweikomponentige Zusammensetzung mit einer ersten Komponente und einer zweiten Komponente, wobei es sich bei der ersten Komponente um eine ein ungesättigtes Polyesterharz oder Vinylesterharz, eine Eisenverbindung und eine thiolhaltige Verbindung umfassende Harzzusammensetzung handelt, und die zweite Komponente eine Peroxidverbindung mit der Formel ROOH, worin R für Wasserstoff oder eine gegebenenfalls substituierte Alkylgruppe steht, umfaßt.

2. Zweikomponentige Zusammensetzung nach Anspruch 1, **dadurch gekennzeichnet, daß** es sich bei der Eisenverbindung um ein Eisencarboxylat oder ein Eisenacetoacetat handelt.

3. Zweikomponentige Zusammensetzung nach einem der Ansprüche 1-2, **dadurch gekennzeichnet, daß** es sich bei dem Thiol in der thiolhaltigen Verbindung um ein aliphatisches Thiol handelt.

4. Zweikomponentige Zusammensetzung nach Anspruch 3, **dadurch gekennzeichnet, daß** es sich bei dem aliphatischen Thiol um ein α-Mercaptoacetat oder β-Mercaptopropionat oder ein Derivat oder eine Mischung davon handelt.

5. Zweikomponentige Zusammensetzung nach einem der Ansprüche 1-4, **dadurch gekennzeichnet, daß** die Thiolfunktionalität der thiolhaltigen Verbindung ≥ 2 und weiter bevorzugt ≥ 3 ist.

6. Zweikomponentige Zusammensetzung nach einem der Ansprüche 1-5, **dadurch gekennzeichnet, daß** die Harzzusammensetzung außerdem auch noch eine Base umfaßt.

7. Zweikomponentige Zusammensetzung nach Anspruch 6, **dadurch gekennzeichnet, daß** es sich bei der Base um eine organische Base mit pKₐ ≥ 10 oder um eine Alkalimetall- oder Erdalkalimetallverbindung handelt.

8. Zweikomponentige Zusammensetzung nach Anspruch 7, **dadurch gekennzeichnet, daß** es sich bei der organischen Base mit pKₐ ≥ 10 um eine stickstoffhaltige Verbindung, vorzugsweise ein Amin und weiter bevorzugt ein tertiäres Amin handelt.

9. Zweikomponentige Zusammensetzung nach Anspruch 6, **dadurch gekennzeichnet, daß** es sich bei der Base um eine Alkalimetall- oder Erdalkalimetallverbindung und vorzugsweise ein Kaliumcarboxylat handelt.

10. Zweikomponentige Zusammensetzung nach einem der Ansprüche 6-9, **dadurch gekennzeichnet, daß** das Molverhältnis zwischen Eisen und der basischen Funktionalität der Base 10:1 bis 1:200 beträgt.

11. Zweikomponentige Zusammensetzung nach einem der Ansprüche 1-10, **dadurch gekennzeichnet, daß** das Peroxid aus der Gruppe der Perether und Perketone ausgewählt ist und vorzugsweise Methylethylketonperoxid ist.

12. Zweikomponentige Zusammensetzung nach einem der Ansprüche 1-11, **dadurch gekennzeichnet, daß** die Harzzusammensetzung im wesentlichen frei von Cobalt ist.

13. Verfahren zur radikalischen Härtung einer Harzzusammensetzung, **dadurch gekennzeichnet, daß** die Härtung ausgehend von einer zweikomponentigen Zusammensetzung nach einem der Ansprüche 1-12 durchgeführt wird.

14. Gehärtete Gegenstände oder Bauteile, erhalten aus einer zweikomponentigen Zusammensetzung nach einem der Ansprüche 1-12.

15. Gehärtete Gegenstände oder Bauteile, erhalten aus einer nach einem Vefahren gemäß Anspruch 13 erhaltenen zweikomponentigen Zusammensetzung.

## Revendications

1. Composition à deux composants comprenant un premier composant et un deuxième composant, le premier composant étant une composition de résine comprenant une résine de polyester insaturée ou une résine d'ester vinylique, un composé de fer et un composé thiol, et le deuxième composant comprenant un composé de peroxyde ayant la formule ROOH, dans laquelle R est hydrogène ou un groupement alkyle éventuellement substitué.

2. Composition à deux composants selon la revendication 1, **caractérisée en ce que** le composé de fer est un carboxylate de fer ou un acétoacétate de fer.

3. Composition à deux composants selon l'une ou l'autre des revendications 1 et 2, **caractérisée en ce que** le thiol dans le composé thiol est un thiol aliphatique.

4. Composition à deux composants selon la revendication 3, **caractérisée en ce que** le thiol aliphatique est un α-mercapto-acétate ou β-mercapto-propionate, ou un dérivé ou un mélange de ceux-ci.

5. Composition à deux composants selon l'une quelconque des revendications 1 à 4, **caractérisée en ce que** la fonctionnalité thiol du composé thiol est ≥ 2, plus préférablement ≥ 3.

6. Composition à deux composants selon l'une quelconque des revendications 1 à 5, **caractérisée en ce que** la composition de résine comprend également une base.

7. Composition à deux composants selon la revendication 6, **caractérisée en ce que** la base est une base organique ayant un pKₐ ≥ 10 ou la base est un composé de métal alcalin ou de métal alcalino-terreux.

8. Composition à deux composants selon la revendication 7, **caractérisée en ce que** la base organique ayant un pKₐ ≥ 10 est un composé azoté, de préférence une amine, plus préférablement une amine tertiaire.

9. Composition à deux composants selon la revendication 6, **caractérisée en ce que** la base est un composé de métal alcalin ou de métal alcalino-terreux, de préférence un carboxylate de potassium.

10. Composition à deux composants selon l'une quelconque des revendications 6 à 9, **caractérisée en ce que** le rapport molaire entre le fer et la fonctionnalité basique de la base est de 10:1 à 1:200.

11. Composition à deux composants selon l'une quelconque des revendications 1 à 10, **caractérisée en ce que** le peroxyde est choisi dans le groupe comprenant les peréthers et les percétones, et de préférence est le péroxyde de méthyléthylcétone.

12. Composition à deux composants selon l'une quelconque des revendications 1 à 11, **caractérisée en ce que** la composition de résine est essentiellement dépourvue de cobalt.

13. Procédé de durcissement radicalaire d'une composition de résine, **caractérisé en ce que** le durcissement est réalisé en partant d'une composition à deux composants selon l'une quelconque des revendications 1 à 12.

14. Objets durcis ou pièces de construction obtenus à partir d'une composition à deux composants selon l'une quelconque des revendications 1 à 12.

15. Objets durcis ou pièces de construction obtenus à partir d'une composition à deux composants obtenue par un procédé selon la revendication 13.
